# EUROPÄISCHE PATENTANMELDUNG

(11) **EP 3 599 048 A1**
(43) Veröffentlichungstag der Anmeldung: **29.01.2020**
(21) Anmeldenummer: 19172880.7
(22) Anmeldetag: 07.05.2019
(51) Int. Cl.: B23Q 3/157, B23Q 3/155

(54) **KETTENGLIEDPAARUNG FÜR EINE WERKZEUGWECHSELKETTE EINES WERK-ZEUG-KETTENMAGAZINS, WERKZEUGWECHSELKETTE FÜR EIN WERKZEUG-KETTENMAGAZIN SOWIE EIN DERARTIGES WERKZEUG-KETTENMAGAZIN**

(30) Priorität: 27.07.2018 DE 102018118250
(71) Anmelder: Mikron GmbH Rottweil, 78628 Rottweil (DE)
(72) Erfinder: Braun, Hans-Dieter, 78665 Frittlingen (DE)
(74) Vertreter: Westphal, Mussgnug & Partner Patentanwälte mbB

(57) **Zusammenfassung**

Die vorliegende Erfindung betrifft eine Kettengliedpaarung für eine Werkzeugwechselkette (52) eines Werkzeug-Kettenmagazins (56), umfassend mindestens ein erstes Kettenglied (10) mit einem ersten Grundträger (12) aus einem ersten Material, der eine erste Längsachse (L1) definiert, einem ersten linken Lagerungsabschnitt (20) zum drehbaren Lagern einer ersten Achse (26), auf welche zumindest eine linke Führungsrolle (27) aufschiebbar ist, und einem ersten rechten Lagerungsabschnitt (24) zum drehbaren Lagern einer zweiten Achse (28), auf welche zumindest eine rechte Führungsrolle (29) aufschiebbar ist, und mindestens ein zweites Kettenglied (45) mit einem zweiten Grundträger (12) aus dem ersten Material, der eine zweite Längsachse (L2) definiert, einem zweiten linken Lagerungsabschnitt (48) zum drehbaren Lagern der zweiten Achse (28), und einem zweiten rechten Lagerungsabschnitt (50) zum drehbaren Lagern der ersten Achse (26), wobei das erste Kettenglied (10) und das zweite Kettenglied (45) mittels der ersten Achse (26) oder der zweiten Achse (28) gelenkig miteinander verbindbar sind und sowohl das erste Kettenglied (10) als auch das zweite Kettenglied (45) jeweils einen mit dem ersten Grundträger (12) und dem zweiten Grundträger (46) verbindbaren Aufnahmekörper (40) zum Aufnehmen zumindest eines Werkzeugs (54) umfassen, wobei der Aufnahmekörper (40) aus einem zweiten Material besteht oder dieses umfasst.

## Beschreibung

Die vorliegende Erfindung betrifft eine Kettengliedpaarung für eine Werkzeugwechselkette eines Werkzeug-Kettenmagazins. Weiterhin betrifft die Erfindung eine Werkzeugwechselkette für ein Werkzeug-Kettenmagazin sowie ein Werkzeug-Kettenmagazin, welches eine derartige Werkzeugwechselkette aufweist.

Werkzeug-Kettenmagazine werden zum Aufnehmen, Transportieren und Lagern von Werkzeugen verwendet. Insbesondere bei komplex gestalteten Bauteilen, die spanabhebend bearbeitet werden, ist es notwendig, die von der Werkzeugmaschine verwendeten Werkzeuge während der Bearbeitung zu wechseln. Aber auch dann, wenn unterschiedliche Bauteile auf derselben Werkzeugmaschine gefertigt werden, ist es häufig notwendig, die Werkzeuge auszutauschen. Die Werkzeug-Kettenmagazine weisen Aufnahmekörper auf, die unterschiedliche Werkzeuge aufnehmen können, welche je nach Bearbeitungsvorgang von der Werkzeugmaschine verwendet werden können.

Die Aufnahmekörper bilden gleichzeitig die Kettenglieder einer üblicherweise geschlossenen Werkzeugwechselkette und sind gelenkig miteinander verbunden. Mittels der Werkzeugkettenmagazine können die benötigten Werkzeuge der Werkzeugmaschine zugeführt und mittels einer entsprechend ausgebildeten Greifvorrichtung aus den Aufnahmekörpern entnommen und in die Arbeitsspindeln der betreffenden Werkzeugmaschine eingesetzt werden. Nicht mehr benötigte Werkzeuge werden entsprechend aus den Arbeitsspindeln entnommen und in einen freien Aufnahmekörper eingebracht. Derartige Werkzeug-Kettenmagazine sind beispielsweise aus der DE 196 09 145 A1, der DE 10 2005 026 172 A1, der DE 87 01 368 U1, der DE 94 14 140 U1 und der DE 10 2008 014 343 A1 bekannt.

Beispielsweise bei der DE 10 2008 014 343 A1 werden die Kettenglieder von einem einstückigen Aufnahmekörper gebildet, der nach Art eines Werkzeugköchers ausgestaltet ist, wobei das Antriebsrad in den Werkzeugköcher eingreift. Damit der Werkzeugköcher die beim Eingriff wirkenden Kräfte sicher aufnehmen kann, weist der Werkzeugköcher Verstärkungsabschnitte aus einem verschleißfesten Material auf, in welche das Antriebsrad eingreift. Hierdurch wird die Fertigung des Werkzeugköchers und folglich der Werkzeugwechselkette verkompliziert und verteuert. Trotz der Verstärkungsabschnitte kann nicht verhindert werden, dass der Werkzeugköcher im Verstärkungsabschnitt einem erhöhten Verschleiß unterworfen ist, wodurch der Eingriff ungenau wird und die Übergabe der Werkzeuge an die Greifvorrichtung fehlschlagen kann. Aufgrund der Tatsache, dass das Antriebsrad in den Werkzeugköcher eingreift und dass der Verstärkungsabschnitt vorgesehen werden muss, ist die Materialauswahl für den Werkzeugköcher begrenzt. Dies führt dazu, dass ein vergleichsweise hartes Material verwendet werden muss, wodurch die aufgenommenen Werkzeuge einem erhöhten Verschleiß unterliegen und beschädigt werden können, was die Bearbeitungsgenauigkeit nachteilig beeinflusst.

Aufgabe einer Ausführungsform der vorliegenden Erfindung ist es, eine Kettengliedpaarung mit mindestens einem ersten Kettenglied und mindestens einem zweiten Kettenglied anzugeben, mit welcher es mit einfachen und kostengünstigen Mitteln möglich ist, den Verschleiß und die Wahrscheinlichkeit von Beschädigungen der aufgenommenen Werkzeuge zu verringern. Des Weiteren liegt einer Ausgestaltung und einer Ausbildung der vorliegenden Erfindung die Aufgabe zugrunde, eine Werkzeugwechselkette bzw. ein Werkzeug-Kettenmagazin zu schaffen, welche derartige Kettenglieder aufweisen.

Diese Aufgabe wird mit den in den Ansprüchen 1, 5 und 8 angegebenen Merkmalen gelöst. Vorteilhafte Ausführungsformen sind Gegenstand der Unteransprüche.

Eine Ausführungsform der Erfindung betrifft eine Kettengliedpaarung für eine Werkzeugwechselkette eines Werkzeug-Kettenmagazins, umfassend mindestens ein erstes Kettenglied mit einem ersten Grundträger aus einem ersten Material, der eine erste Längsachse definiert, einem ersten linken Lagerungsabschnitt zum drehbaren Lagern einer ersten Achse, auf welche zumindest eine linke Führungsrolle aufschiebbar ist, und einen ersten rechten Lagerungsabschnitt zum drehbaren Lagern einer zweiten Achse, auf welche zumindest eine rechte Führungsrolle aufschiebbar ist. Die Kettengliedpaarung umfasst weiterhin mindestens ein zweites Kettenglied mit einem zweiten Grundträger aus dem ersten Material, der eine zweite Längsachse definiert, einem zweiten linken Lagerungsabschnitt zum drehbaren Lagern der zweiten Achse, und einem zweiten rechten Lagerungsabschnitt zum drehbaren Lagern der ersten Achse. Dabei sind das erste Kettenglied und das zweite Kettenglied mittels der ersten Achse oder der zweiten Achse gelenkig miteinander verbindbar und sowohl das erste Kettenglied als auch das zweite Kettenglied umfassen jeweils einen mit dem ersten Grundkörper und dem zweiten Grundkörper verbindbaren Aufnahmekörper zum Aufnehmen zumindest eines Werkzeugs, wobei der Aufnahmekörper aus einem zweiten Material besteht oder dieses umfasst.

Das erste und das zweite Kettenglied können identisch aufgebaut sein. Da aber die beiden Kettenglieder mit der ersten Achse oder der zweiten Achse miteinander verbindbar sein sollen, können die linken Lagerungsabschnitte und die rechten Lagerungsabschnitte nicht identisch sein, sondern müssen ineinander einbringbar sein, so dass die beiden Achsen mit beiden Lagerungsabschnitten zusammenwirken können. Es bietet sich an, die beiden Lagerungsabschnitte mit Gelenkaugen zu versehen, durch welche die beiden Achsen durchgeführt werden können. Die Gelenkaugen des ersten Lagerungsabschnitts müssen bezogen auf die Achsen versetzt zu den Gelenkaugen des zweiten Lagerungsabschnitts angeordnet sein. Hieraus folgt ein asymmetrischer Aufbau der Kettenglieder für den Fall, dass sie identisch aufgebaut sein sollen. Für den Fall, dass sie nicht identisch aufgebaut sind, können sie in sich zumindest abschnittsweise spiegelsymmetrisch gestaltet werden, unterscheiden sich aber nur in den Lagerungsabschnitten. Ein symmetrischer Aufbau hat Vorteile in der Fertigung und in der Dynamik im Betrieb.

Ein wesentlicher Aspekt der vorliegenden Erfindung liegt im zweiteiligen Aufbau der Kettenglieder. Das erste Material des Grundträgers kann so gewählt werden, dass die Belastungen im Betrieb der Kettenglieder sicher aufgenommen werden können. Hierzu kann als das erste Material ein Material gewählt werden, welches eine hohe Zugfestigkeit, einen geringen Verschleiß und ein geringes Gewicht aufweist. Beispielsweise kann der Grundträger aus einem metallischen Werkstoff wie Stahlblech gefertigt sein. Dabei kann ein Edelstahl eingesetzt werden, wodurch es möglich ist, auf Korrosionsschutzmaßnahmen zu verzichten. Zudem ist Stahl ein vergleichsweise günstiger Werkstoff und kann beispielsweise durch Lasern und Biegen kostengünstig verarbeitet werden, so dass keine spanende Bearbeitung notwendig ist.

Das zweite Material kann so gewählt werden, dass die Werkzeuge beim Einbringen in den und beim Entnehmen aus dem Aufnahmekörper so weit wie möglich geschont werden, so dass Beschädigungen und der Verschleiß der Werkzeuge und insbesondere der Werkzeughalter minimiert werden. Somit kann die Präzision der Bearbeitung der Werkstücke hoch gehalten und Ausschuss durch beschädigte Werkzeughalter vermieden werden. Als zweites Material kann ein Kunststoff, insbesondere ein spritzgussfähiger Kunststoff, eingesetzt werden, beispielsweise ein technischer Thermoplast wie Polyamid 6 (PA6). Hochleistungsthermoplaste wie Polyphenylensulfid (PPS) können ebenfalls für das zweite Material eingesetzt werden. Diese Kunststoffe zeichnen sich durch eine hohe Formbeständigkeit im Spritzguss aus. Faseranteile beispielsweise von 30 bis 50% können unter anderem zur Verbesserung der Formstabilität und der Erhöhung der Zugfestigkeit vorgesehen werden.

Die Werkzeughalter sind üblicherweise aus einem gehärteten Edelstahl, so dass die Härte der Werkzeughalter in einem relativ engen Bereich liegt. Als Maß der Härte können die Härten nach Shore, Vickers oder Rockwell verwendet werden. Als Richtwert hat es sich als günstig herausgestellt, dass die Härte der Werkzeughalter und die Härte des zweiten Materials je nach verwendetem Maß für die Härte in einem Verhältnisbereich von 4 : 1 bis 2 : 1 und insbesondere 3 : 1 stehen sollten.

Aufgrund der vorschlagsgemäßen Verwendung von unterschiedlichen Materialien für die Grundträger der Kettenglieder und für die Aufnahmekörper können innerhalb die Kettenglieder mit einer hohen Zugfestigkeit versehen werden, so dass hohe Zugkräfte vom Grundträger aufgenommen werden können, zudem lassen sich mit dem weicheren zweiten Material eine formschlüssige Aufnahme der Werkzeuge im Aufnahmekörper realisieren und insbesondere die Werkzeughalter schonen.

Nach Maßgabe einer weiteren Ausführungsform sind der erste linke Lagerungsabschnitt und der erste rechte Lagerungsabschnitt derart ausgebildet, dass die erste Achse und die zweite Achse im selben Abstand zur ersten Längsachse und parallel zu dieser angeordnet sind und in einer durch die erste Längsachse verlaufende Ebene liegen. Der zweite linke Lagerungsabschnitt und der zweite rechte Lagerungsabschnitt sind derart ausgebildet, dass die erste Achse und die zweite Achse im selben Abstand zur zweiten Längsachse und parallel zu dieser angeordnet sind und in einer durch die zweite Längsachse verlaufenden Ebene liegen. In diesem Fall sind das erste Kettenglied und das zweite Kettenglied abschnittsweise punktsymmetrisch aufgebaut, wodurch sich keine Limitierungen der Drehrichtung der Kettenglieder relativ zueinander um die Achsen ergeben. Die Kettenglieder können gleichermaßen rechts oder links herum mit gleichem Radius um die Achsen gedreht werden. Dies hat zur Folge, dass das die Kettenglieder umfassende Werkzeug-Kettenmagazin sowohl Linkskurven als auch Rechtskurven umfassen kann, wodurch die Ausbildung des Werkzeug-Kettenmagazins flexibler gestaltet werden kann. Kurven mit 90° innerhalb eines vergleichsweise kleinen Radius lassen sich realisieren. Die Werkzeuge können zentrisch im Aufnahmekörper aufgenommen werden, so dass keine dynamischen Unwuchten entstehen und Linkskurven und Rechtskurven mit derselben Belastung für die Kettenglieder und das Kettenmagazin durchfahren werden können. Ein einseitiger Verschleiß wird verhindert.

In einer weitergebildeten Ausführungsform kann der Aufnahmekörper eine senkrecht zur Längsachse ausgerichtete Öffnung aufweisen, so dass das Werkzeug mit einer senkrecht zur Längsachse gerichteten Bewegung in den Aufnahmekörper einbringbar und vom Aufnahmekörper entnehmbar ist. Mit anderen Worten kann das Werkzeug bezogen auf die Bewegungsrichtung des Werkzeug-Kettenmagazins seitlich oder radial zur Längsachse aus dem Aufnahmekörper entnommen und wieder in diesen eingesetzt werden, was beispielsweise bei dem in der DE 10 2008 014 343 A1 gezeigten Werkzeugköcher nicht möglich ist. Dort kann das Werkzeug bezogen auf die Bewegungsrichtung des Werkzeug-Kettenmagazins nur in axialer Richtung entlang der Längsachse von unten in den Werkzeugköcher eingebracht und aus diesem entnommen werden. In dieser Ausführungsform wird eine gute Zugänglichkeit zum Aufnahmekörper bereitgestellt, wodurch das Einbringen und die Entnahme der Werkzeuge vereinfacht werden.

Bei einer weitergebildeten Ausführungsform können der erste Grundträger und der zweite Grundträger jeweils einen dritten Lagerungsabschnitt zum Lagern einer dritte Achse aufweisen, auf welche zumindest eine Leitrolle aufschiebbar ist, wobei die dritte Achse senkrecht zur ersten Längsachse und zur zweiten Längsachse verläuft. Mit den linken und rechten Führungsrollen kann bereits eine ausreichende Führung der Kettenglieder innerhalb des Werkzeug-Kettenmagazins bereitgestellt werden, allerdings müssen die Führungsrollen so ausgestaltet sein, dass sie auch entlang der ersten und zweiten Achsen eine Führung bereitstellen. In dieser Ausführungsform wird die Führung entlang der ersten und zweiten Achsen von der Leitrolle übernommen, so dass die Ausgestaltung der Führungsrollen einfach gehalten werden kann. Aufgrund der Aufteilung der Führungsfunktionen kann auch der Verschleiß der Führungsrollen und der Leitrollen reduziert werden.

Eine Ausbildung der Erfindung betrifft eine Werkzeugwechselkette für ein Werkzeug-Kettenmagazin, umfassend eine Anzahl von Kettengliedpaarungen nach einem der vorherigen Ausführungsformen, bei denen die ersten Kettenglieder gelenkig mit den zweiten Kettengliedern verbunden sind.

Die technischen Effekte und Vorteile, die sich mit der vorschlagsgemäßen Werkzeugwechselkette erreichen lassen, entsprechen denjenigen, die für die vorliegende Kettengliedpaarung erörtert worden sind. Zusammenfassend sei darauf hingewiesen, dass das erste Material des Grundträgers so gewählt werden kann, dass die Belastungen im Betrieb der Kettenglieder sicher aufgenommen und der Verschleiß und das Gewicht gering gehalten werden. Das zweite Material kann so gewählt werden, dass die Werkzeuge und insbesondere die Werkzeughalter beim Einbringen in den und beim Entnehmen aus dem Aufnahmekörper so weit wie möglich geschont werden, so dass Beschädigungen und der Verschleiß der Werkzeuge minimiert werden. Somit kann die Präzision der Bearbeitung der Werkstücke hoch gehalten und Ausschuss vermieden werden.

Bei einer weiteren Ausbildung können auf die erste Achse zwei linke Führungsrollen beabstandet zueinander aufgeschoben und auf die zweite Achse zwei rechte Führungsrollen beabstandet zueinander aufgeschoben sein. Um die Führungsrollen beabstandet zueinander auf die Achsen aufschieben zu können, können die Achsen Absätze aufweisen oder es können Distanzhülsen verwendet werden. Aufgrund der beabstandeten Anordnung von jeweils zwei Führungsrollen auf den jeweiligen Achsen können im Betrieb des Werkzeug-Kettenmagazins auftretende Drehmomente aufgenommen werden, ohne dass es zu einer erhöhten Belastung der Achsen und der Führungsrollen kommt.

Eine weiterentwickelte Ausbildung zeichnet sich dadurch aus, dass auf die dritte Achse zwei Leitrollen beabstandet zueinander aufgeschoben sind. Auch in diesem Fall gilt, dass im Betrieb des Werkzeug-Kettenmagazins auftretende Drehmomente aufgenommen werden, ohne dass es zu einer erhöhten Belastung der Achsen und der Leitrollen kommt.

Eine Ausgestaltung der Erfindung betrifft ein Werkzeug-Kettenmagazin zum Aufnehmen, Transportieren und Lagern von Werkzeugen, umfassend eine Werkzeugwechselkette nach einem der zuvor diskutierten Ausbildungen, zumindest eine Führungsbahn, auf welcher die Führungsrollen abrollen, und zumindest ein Antriebsrad, welches zum Antreiben der Werkzeugwechselkette in die ersten Kettenglieder und die zweiten Kettenglieder eingreift.

Die technischen Effekte und Vorteile, die sich mit dem vorschlagsgemäßen Werkzeug-Kettenmagazin erreichen lassen, entsprechen denjenigen, die für die vorliegende Werkzeugwechselkette und die vorliegende Kettengliedpaarung erörtert worden sind. Zusammenfassend sei darauf hingewiesen, dass vorschlagsgemäß das erste Material des Grundträgers so gewählt werden kann, dass die Belastungen im Betrieb der Kettenglieder sicher aufgenommen und der Verschleiß und das Gewicht gering gehalten werden. Das zweite Material kann so gewählt werden, dass die Werkzeuge beim Einbringen in den und beim Entnehmen aus dem Aufnahmekörper so weit wie möglich geschont werden, so dass Beschädigungen und der Verschleiß der Werkzeuge und insbesondere deren Werkzeughalter minimiert werden. Somit kann die Präzision der Bearbeitung hoch gehalten und Ausschuss vermieden werden.

In einer weiteren Ausgestaltung kann das Antriebsrad in die Führungsrollen eingreifen. Die Führungsrollen bieten sich für den Eingriff an, da sie gut zugänglich angeordnet werden können. Da erfindungsgemäß der Aufnahmekörper aus einem im Vergleich zum ersten Material des Grundträgers weicheren Material gefertigt ist, bietet sich der Aufnahmekörper nicht für den Eingriff des Antriebsrads an, da hierdurch ein erhöhter Verschleiß auftreten würde. Mit dem Eingriff in die Führungsrollen wird dieser Verschleiß vermieden. Zudem stellen die Führungsrollen im Vergleich zum Aufnahmekörper Massenartikel dar, die auf deutlich kostengünstigere Weise ausgetauscht werden können.

Nach einer fortentwickelten Ausgestaltung können die Führungsrollen aus dem ersten Material bestehen oder dieses enthalten oder können die Führungsrollen aus einem dritten Material bestehen oder dieses enthalten. In dieser Ausgestaltung kann das Material der Führungsrollen so gewählt werden, dass der Verschleiß der Führungsrollen, der sich insbesondere aus dem Eingriff des Antriebsrads ergibt, gering gehalten wird. Die Häufigkeit des Austauschs kann hierdurch verringert werden. Zudem kann als das dritte Material ein Material mit guten Dämpfungseigenschaften gewählt werden, so dass die Geräuschentwicklung im Betrieb des Werkzeug-Kettenmagazins gering gehalten wird. Als das dritte Material kann beispielsweise ein Polyamid mit einem Faseranteil von 30 bis 50% eingesetzt werden.

In einer weiteren Ausgestaltung können auf die erste Achse zwei linke Führungsrollen beabstandet zueinander aufgeschoben sein, auf die zweite Achse zwei rechte Führungsrollen beabstandet zueinander aufgeschoben sein, und das Antriebsrad in die linken Führungsrollen und in die rechten Führungsrollen eingreifen. Das Antriebsrad greift in zwei Ebenen in die Führungsrollen ein, wodurch ein gleichmäßiger Eingriff realisiert werden kann, der die Kettenglieder schont. Die Kettenglieder werden auch im Antriebsrad gut geführt.

Bei einer weiterentwickelten Ausgestaltung ist vorgesehen, dass eine der linken Führungsrollen und eine der rechten Führungsrollen außerhalb des Antriebsrads auf der Führungsbahn abrollen. Außerhalb des Antriebsrads wird die Werkzeugwechselkette von der Führungsbahn und innerhalb des Antriebsrads vom Antriebsrad selbst geführt. Das Werkzeug-Kettenmagazin kann so ausgestaltet werden, dass es so gut wie keine Stellen aufweist, wo die Kettenglieder nicht geführt sind.

Eine fortgebildete Ausgestaltung gibt vor, dass das Werkzeug-Kettenmagazin zumindest eine Leitbahn aufweist, auf welcher die Leitrollen abrollen. Die Leitrollen drehen um die dritte Achse, welche senkrecht zu den Achsen der Führungsrollen angeordnet ist. Folglich wird die Führung der Werkzeugwechselkette entlang der Achsen der Führungsrollen von den Leitrollen übernommen. Weitere Maßnahmen für eine entsprechende Führung sind nicht notwendig, wodurch insbesondere der Verschleiß der Führungsrollen gering gehalten werden kann.

Bei einer fortgebildeten Ausgestaltung weist das Werkzeug-Kettenmagazin eine erste Leitbahn und eine zweite Leitbahn auf, wobei eine erste Leitrolle und eine zweite Leitrolle beabstandet zueinander auf die dritte Achse aufgeschoben sind und wobei außerhalb des Antriebsrads die erste Leitrolle auf der ersten Leitbahn und die zweite Leitrolle auf der zweiten Leitbahn abrollen. Drehmomente, die im Betrieb auf die Kettenglieder wirken, können gut aufgenommen werden, wobei die Kettenglieder gleichmäßig belastet werden.

Nach einer weiteren Ausgestaltung weist das Werkzeug-Kettenmagazin zumindest einen Umlenkabschnitt mit einer Umlenk-Kurvenbahn auf, wobei die Führungsrollen und/oder die Leitrollen auf der Umlenk-Kurvenbahn abrollen. Insbesondere, um den verfügbaren und üblicherweise eng bemessenen Bauraum gut ausnutzen zu können, ist es von Vorteil, die WerkzeugWechselkette umlenken zu können, was in dieser Ausgestaltung mit den Umlenk-Kurvenbahnen realisiert werden kann. Insbesondere dann, wenn die Kettenglieder gleichermaßen rechts wie links gedreht werden können, kann auch eine vergleichsweise lange Werkzeugwechselkette auf einer geringen Fläche geführt werden.

Beispielhafte Ausführungsformen der Erfindung werden im Folgenden unter Bezugnahme auf die beigefügten Zeichnungen näher erläutert. Es zeigen
- Figur 1A: eine perspektivische Darstellung eines Ausführungsbeispiels eines ersten Kettenglieds,
- Figur 1B: eine seitliche Explosionsdarstellung des in Figur 1A dargestellten ersten Kettenglieds,
- Figur 1C: eine Vorderansicht auf ein erstes Kettenglied und auf ein zweites Kettenglied,
- Figur 2A: eine Schnittdarstellung durch ein erstes Kettenglied mit einem aufgenommenen Werkzeug entlang einer ersten Ebene,
- Figur 2B: eine Schnittdarstellung durch das in Figur 2A gezeigte erstes Kettenglied mit einem aufgenommenen Werkzeug entlang einer zweiten Ebene, die parallel und leicht versetzt zur ersten Ebene verläuft,
- Figur 3: eine Draufsicht auf ein Ausführungsbeispiel eines erfindungsgemäßen Werkzeug-Kettenmagazins,
- Figur 4A: eine perspektivische Ansicht auf das in Figur 3 dargestellte Ausführungsbeispiel des WerkzeugKettenmagazins im Bereich eines Antriebsrads ohne eine Werkzeugwechselkette,
- Figur 4B: eine perspektivische Ansicht auf das in Figur 3 dargestellte Ausführungsbeispiel des Werkzeug-Kettenmagazins im Bereich eines Umlenkrads mit einer Werkzeugwechselkette,
- Figur 5A: eine perspektivische Ansicht auf das in Figur 3 dargestellte Ausführungsbeispiel des Werkzeug-Kettenmagazins im Bereich eines Umlenkabschnitts, und
- Figur 5B: das in Figur 5A gezeigte Werkzeug-Kettenmagazin im Bereich des Umlenkabschnitts ohne die Werkzeugwechselkette.

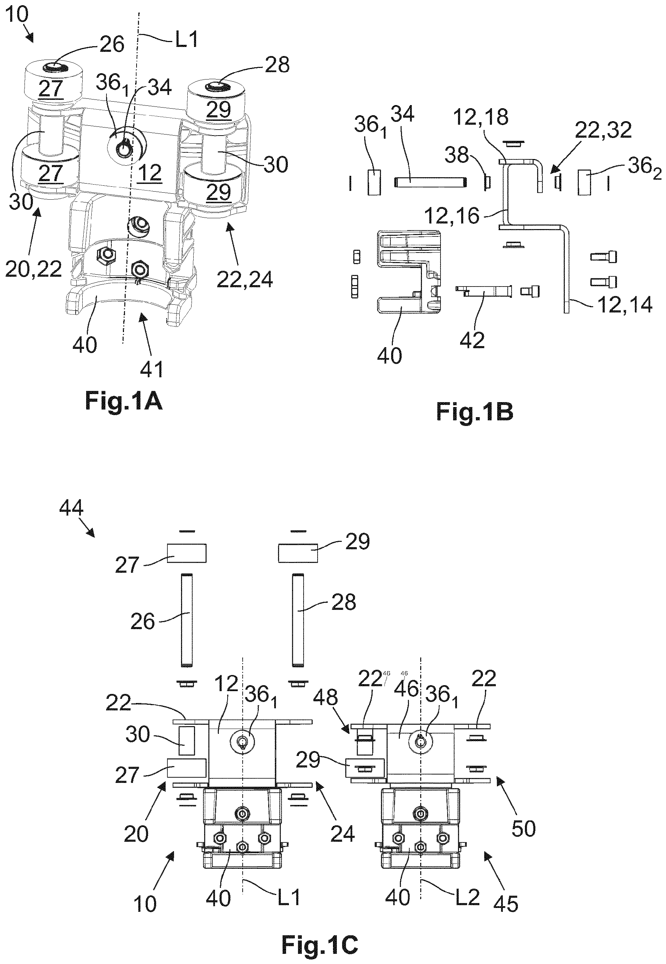

In Figur 1A ist ein Ausführungsbeispiel eines erfindungsgemäßen ersten Kettenglieds 10 anhand einer perspektivischen Darstellung und in Figur 1B anhand einer seitlichen Explosionsdarstellung gezeigt. Das erste Kettenglied 10 weist einen ersten Grundträger 12 auf, welcher, wie insbesondere aus der Figur 1B erkennbar, einen S-förmigen Verlauf aufweist. Hierzu umfasst der erste Grundträger 12 einen ersten L-förmigen Unterabschnitt 14, einen zweiten U-förmigen Unterabschnitt 16 und einen dritten L-förmigen Unterabschnitt 18. Der erste Grundträger 12 ist in diesem Ausführungsbeispiel einteilig ausgebildet, wobei die Unterabschnitte 14, 16, 18 durch Abkanten bereitgestellt werden. Alternativ können die drei Unterabschnitte 14, 16, 18 miteinander auf eine geeignete Weise verbunden sein. Der erste Grundträger 12 besteht aus einem ersten Material, in diesem Fall aus einem Stahlblech. Der erste Grundträger 12 definiert eine erste Längsachse L1 des ersten Kettenglieds 10.

Der erste Grundträger 12 bildet einen ersten linken Lagerungsabschnitt 20, der zwei Gelenkaugen 22 umfasst, und einen ersten rechten Lagerungsabschnitt 24, der ebenfalls zwei Gelenkaugen 22 umfasst. Durch die Gelenkaugen 22 des ersten linken Lagerungsabschnitts 20 ist eine erste Achse 26 durchgeführt und durch die Gelenkaugen 22 des ersten rechten Lagerungsabschnitts 24 ist eine zweite Achse 28 durchgeführt. Auf die erste Achse 26 sind zwei linke Führungsrollen 27 beabstandet zueinander aufgeschoben, wobei zum Bereitstellen des Abstands eine Distanzhülse 30 vorgesehen ist. Entsprechend sind auf die zweite Achse 28 zwei rechte Führungsrollen 29 aufgeschoben, ebenfalls mittels einer Distanzhülse 30 beabstandet zueinander. Die linken und rechten Führungsrollen 27, 29 sind baugleich. Die erste Achse 26 und die zweite Achse 28 verlaufen parallel zueinander und parallel zur ersten Längsachse L1 und weisen denselben Abstand zur ersten Längsachse L1 auf. Zudem liegen die beiden Achsen 26, 28 in einer Ebene, die durch die erste Längsachse L1 verläuft.

Darüber hinaus bildet der erste Grundträger 12 einen dritten Lagerungsabschnitt 32 ebenfalls mit zwei Gelenkaugen 22, durch welche eine dritte Achse 34 durchgeführt werden kann. Die dritte Achse 34 verläuft senkrecht zur ersten und zweiten Achse 26, 28. Auf die dritte Achse 34 sind zwei Leitrollen 36₁, 36₂ beabstandet zueinander aufgeschoben.

Damit sich die Achsen 26, 28, 34 in den Lagerungsabschnitten gut und reibungsarm drehen können, sind Lagerschalen und/oder Lagerhülsen 38 vorgesehen.

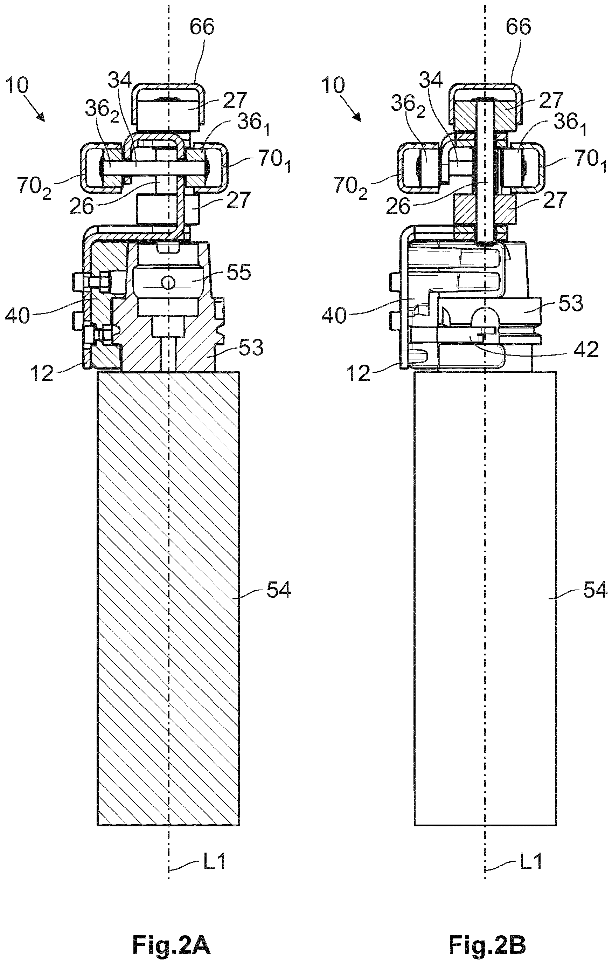

Am ersten Grundträger 12 ist ein Aufnahmekörper 40 befestigt, in diesem Fall mittels einer Schraubverbindung. Der Aufnahmekörper 40 dient zur Aufnahme zumindest eines Werkzeugs 54 (siehe Figur 2). Der Aufnahmekörper 40 weist eine senkrecht zur ersten Längsachse L1 gerichtete Öffnung 41 auf, so dass die Werkzeuge 54 mittels einer senkrecht zur ersten Längsachse L1 gerichteten Bewegung in den Aufnahmekörper 40 eingebracht und vom Aufnahmekörper 40 entnommen werden können. Der Aufnahmekörper 40 besteht aus einem zweiten Material oder umfasst das zweite Material, welches im Vergleich zum ersten Material des ersten Grundträgers 12 weicher ist, wodurch die aufgenommenen Werkzeuge 54 geschont werden. Als zweites Material bietet sich ein Kunststoff an. Weiterhin ist erkennbar, dass eine Feder 42 am Aufnahmekörper 40 befestigt ist, mit welcher das Werkzeug 54 im Aufnahmekörper 40 fixiert werden kann.

In Figur 1C ist eine Kettengliedpaarung 44 dargestellt, welche das in den Figuren 1A und 1B gezeigte erste Kettenglied 10 und ein zweites Kettenglied 45 umfasst. Der Aufbau des zweiten Kettenglieds 45 entspricht weitgehend dem Aufbau des ersten Kettenglieds 10, allerdings umfasst das zweite Kettenglied 45 einen zweiten Grundträger 46, der eine zweite Längsachse L2 definiert. Der zweite Grundträger 46 besteht aus dem ersten Material, wie auch der erste Grundträger 12. Weiterhin bildet der zweite Grundträger 46 einen zweiten linken Lagerungsabschnitt 48 zum drehbaren Lagern der zweiten Achse 28 und einen zweiten rechten Lagerungsabschnitt 50 zum drehbaren Lagern der ersten Achse 26. Ein Vergleich zwischen dem ersten Kettenglied 10 und dem zweiten Kettenglied 45 nach Figur 1C ergibt, dass die Gelenkaugen 22 des zweiten linken Lagerungsabschnitts 48 einen etwas geringeren Abstand zueinander aufweisen als die Gelenkaugen 22 des ersten rechten Lagerungsabschnitts 24. Auch die Gelenkaugen 22 des zweiten rechten Lagerungsabschnitts 50 weisen einen geringeren Abstand zueinander auf als die Gelenkaugen 22 des ersten linken Lagerungsabschnitts 20. Hierdurch können die Gelenkaugen 22 der beiden Kettenglieder 10, 45 fluchtend zueinander angeordnet werden, so dass die erste Achse 26 und die zweite Achse 28 zum gelenkigen Verbinden der beiden Kettenglieder 10, 45 durch die betreffenden Gelenkaugen 22 durchgeführt werden können. Die miteinander verbundenen Kettenglieder 10, 45 bilden eine Werkzeugwechselkette 52.

Auch das zweite Kettenglied 45 weist den identisch aufgebauten Aufnahmekörper 40 und den dritten Lagerungsabschnitt 32 auf. Die Führungsrollen 27, 29 und die Leitrollen 36 sind genauso wie beim ersten Kettenglied 10 auf die betreffenden Achsen 26, 28, 34 aufgeschoben.

Figur 2A zeigt eine Schnittdarstellung durch das erste Kettenglied 10, wobei ein Werkzeughalter 53 eines Werkzeugs 54 in den Aufnahmekörper 40 eingebracht ist. Der Werkzeughalter 53 weist dabei eine Aushöhlung 55 auf, die beispielsweise so ausgebildet ist, dass das Werkzeug mit einer Hohlschaftkegel-Werkzeugaufnahme (HSK-Werkzeugaufnahme) einer Werkzeugmaschine verbunden werden kann. Gut erkennbar ist, dass die beiden Leitrollen 36 auf der dritten Achse 34 (siehe Figur 1B), die senkrecht zur ersten Längsachse L1 verläuft, angeordnet sind. Weiterhin ist erkennbar, dass die Drehachse D des aufgenommenen Werkzeugs 54 in einer Ebene liegt, in der auch die erste und die zweite Achse 26, 28 liegen.

Figur 2B zeigt eine Schnittdarstellung durch das erste Kettenglied 10, wobei die Schnittebene parallel zur Schnittebene nach Figur 2A aber etwas versetzt hierzu verläuft, so dass das Werkzeug 54 nicht von der Schnittebene geschnitten wird. Wie man in Figur 2B gut sieht, wirkt die Feder 42 mit dem Werkzeughalter 53 zusammen, so dass das Werkzeug 54 im Aufnahmekörper 40 gehalten wird.

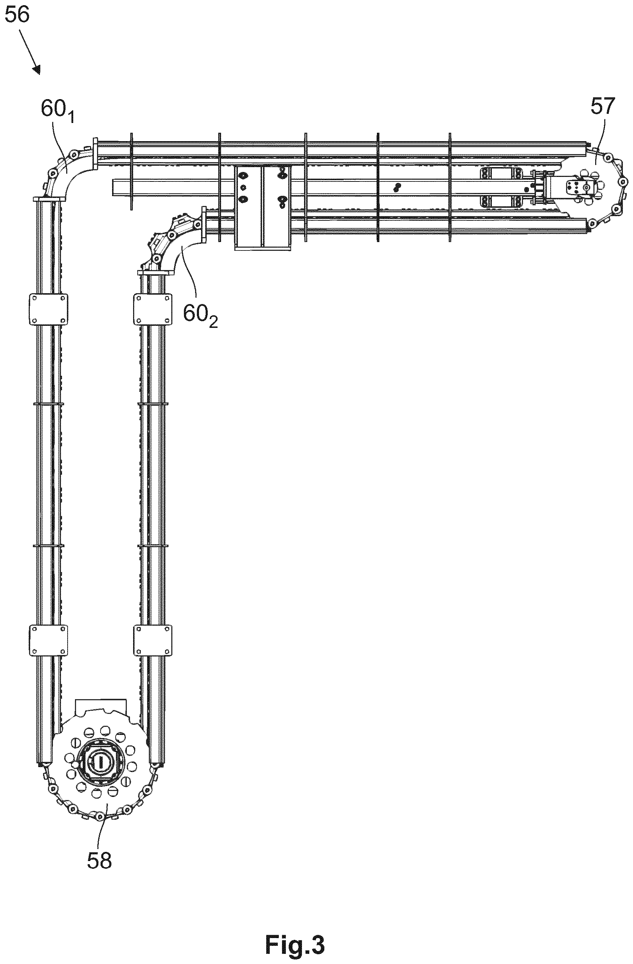

Figur 3 zeigt eine Draufsicht auf ein Werkzeug-Kettenmagazin 56, welches ein Antriebsrad 58 und ein Umlenkrad 57 sowie einen ersten Umlenkabschnitt 60₁ und einen zweiten Umlenkabschnitt 60₂ aufweist. Im Eingriffsbereich des Antriebsrads 58 und des Umlenkrads 57 wird die Werkzeugwechselkette 52 um jeweils 180° und in den beiden Umlenkabschnitten 60 um jeweils 90° umgelenkt. Die Kurvenrichtung der Werkzeugwechselkette 52 ist im ersten Umlenkabschnitt 60₁ entgegengesetzt zum zweiten Umlenkabschnitt 60₂.

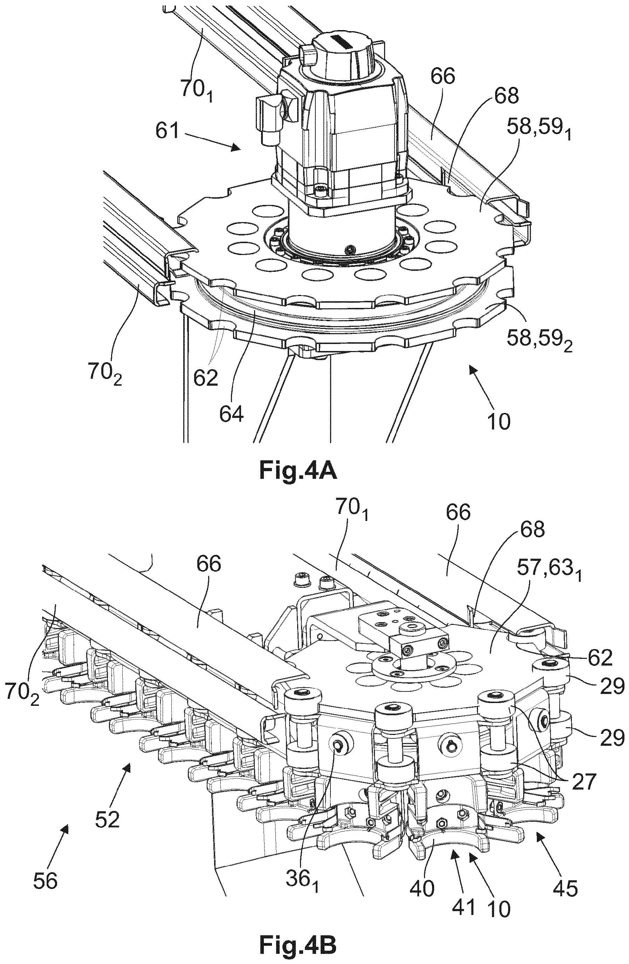

In Figur 4A ist das in Figur 3 gezeigte Werkzeug-Kettenmagazin 56 im Bereich des Antriebsrads 58 anhand einer perspektivischen Darstellung gezeigt, wobei aus Darstellungsgründen die Werkzeugwechselkette 52 nicht gezeigt ist. Figur 4B zeigt das Werkzeug-Kettenmagazin 56 im Bereich des Umlenkrads 57 mit der Werkzeugwechselkette 52. Da das Antriebsrad 58 und das Umlenkrad 57 ähnlich aufgebaut sind, bezieht sich die folgende Beschreibung sowohl auf das Antriebsrad 58 als auch auf das Umlenkrad 57. Der wesentliche Unterschied ist, dass das Antriebsrad 58 mittels einer Antriebseinrichtung 61 angetrieben ist, während das Umlenkrad 57 selbst nicht angetrieben ist und von der Werkzeugwechselkette 52 mitgeschleppt wird.

Das Antriebsrad 58 weist eine erste Antriebsscheibe 59₁ und eine zweite Antriebsscheibe 59₂ auf, die parallel zueinander verlaufen und kreissektorförmige Ausnehmungen 62 aufweisen. Entsprechend weist das Umlenkrad 57 eine erste Umlenkscheibe 63₁ und eine zweite Umlenkscheibe 63₂ auf, wobei letztere in der Figur 4B von der Werkzeugwechselkette 52 verdeckt wird. Auch die erste Umlenkscheibe 63₁ und die zweite Umlenkscheibe 63₂ weisen die Ausnehmungen 62 auf. Mit den Ausnehmungen greifen die erste Antriebsscheibe 59₁ und die erste Umlenkscheibe 63₁ in die bezogen auf die für Figur 4B gewählte Darstellung oberen der linken Führungsrollen 27 und in die oberen der beiden rechten Führungsrollen 29 ein, während die zweite Antriebsscheibe 59₂ und die zweite Umlenkscheibe 63₂ in die unteren der linken Führungsrollen 27 und die unteren der rechten Führungsrollen 29 eingreifen. Im Bereich des Antriebsrads 58 rollt die zum Antriebsrad 58 hinzeigende zweite Leitrolle 36₂ auf einer Antriebsrad-Kurvenbahn 64 ab, während die zweite Leitrolle 36₂ im Bereich des Umlenkrads 57 auf einer Umlenkrad-Kurvenbahn 65 abrollt, welche in der Figur 4B von der Werkzeugwechselkette 52 verdeckt wird.

Weiterhin ist zu sehen, dass das Werkzeug-Kettenmagazin 56 eine Führungsbahn 66 aufweist, in welche die oberen der linken Führungsrollen 27 und die oberen der beiden rechten Führungsrollen 29 eingebracht werden, nachdem sie den Eingriffsbereich des Antriebsrads 58 oder den Eingriffsbereich des Umlenkrads 57 verlassen haben, wobei ein Übergangsbereich vorhanden sein kann, in welchem das Antriebsrad 58 oder das Umlenkrad 57 noch in die Führungsrollen 27, 29 eingreift und dennoch die Führungsrollen 27, 29 schon mit der Führungsbahn 66 zusammenwirken. Dies ist insbesondere deshalb möglich, weil die Führungsbahn 66 einen U-förmigen Querschnitt aufweist (siehe Figur 2), wobei jedoch der nach innen zeigende Schenkel der Führungsbahn 66 im Bereich des Antriebsrads 58 und des Umlenkrads 57 entfernt wurde und folglich die Führungsbahn 66 dort einen zum Antriebsrad 58 bzw. zum Umlenkrad 57 hinweisenden Durchbruch 68 aufweist, durch welche das Antriebsrad 58 und das Umlenkrad 57 in die Führungsbahn 66 hineinragen. Mit diesem Übergangsbereich ist sichergestellt, dass die Kettenglieder 10, 45 innerhalb des Werkzeug-Kettenmagazins 56 unterbrechungsfrei geführt werden.

Weiterhin ist aus den Figuren 4A und 4B zu erkennen, dass das Werkzeug-Kettenmagazin 56 eine erste Leitbahn 70₁ und eine zweite Leitbahn 70₂ aufweist (vgl. auch Figur 2), in welche jeweils eine der Leitrollen 36 eingreift. Wie auch die Führungsbahn 66 weisen die beiden Leitbahnen 70₁, 70₂ einen U-förmigen Querschnitt auf, so dass sie mit handelsüblichen Profilblechen auf kostengünstige Weise bereitgestellt werden können.

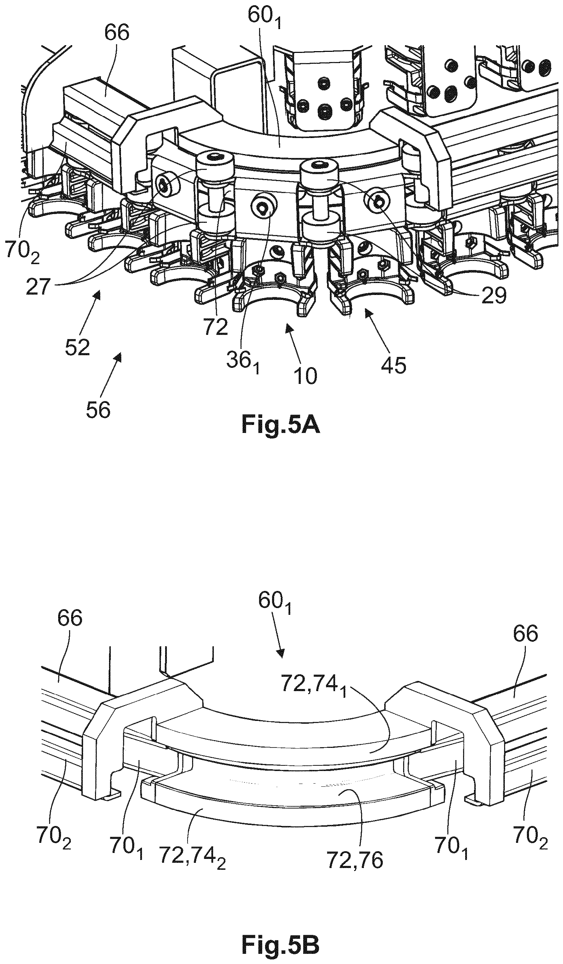

In Figur 5A ist das in Figur 3 gezeigte Werkzeug-Kettenmagazin 56 im Bereich des ersten Umlenkabschnitts 60₁ anhand einer perspektivischen Darstellung gezeigt. Figur 5B zeigt den ersten Umlenkabschnitt 60₁ ohne die Werkzeugwechselkette 52. Der erste Umlenkabschnitt 60₁ weist eine Umlenk-Kurvenbahn 72 mit einem oberen vertikalen Umlenk-Kurvenbahnabschnitt 74₁ und einem unteren vertikalen Umlenk-Kurvenbahnabschnitt 74₂ sowie einen horizontalen Umlenk-Kurvenabschnitt 76 auf. Die ersten und zweiten Führungsrollen 27, 29 rollen auf dem oberen vertikalen Umlenk-Kurvenbahnabschnitt 74₁ und dem unteren vertikalen Umlenk-Kurvenbahnabschnitt 74₂ und die zum ersten Umlenkabschnitt 60₁ hinzeigenden inneren Leitrollen 36 auf dem horizontalen Kurvenabschnitt 76 ab. Der zweite Umlenkabschnitt 60₂ ist im Wesentlichen identisch aufgebaut.

### Bezugszeichenliste

- 10: erstes Kettenglied
- 12: erster Grundträger
- 14: erster Unterabschnitt
- 16: zweiter Unterabschnitt
- 18: dritter Unterabschnitt

- 20: erster linker Lagerungsabschnitt
- 22: Gelenkauge
- 24: erster rechter Lagerungsabschnitt
- 26: erste Achse
- 27: linke Führungsrolle
- 28: zweite Achse
- 29: rechte Führungsrolle

- 30: Distanzhülse
- 32: dritter Lagerungsabschnitt
- 34: dritte Achse
- 36: Leitrolle
- 36₁, 36₂: erste Leitrolle, zweite Leitrolle
- 38: Lagerschale

- 40: Aufnahmekörper
- 41: Öffnung
- 42: Feder
- 44: Kettengliedpaarung
- 45: zweites Kettenglied
- 46: zweiter Grundträger
- 48: zweiter linker Lagerungsabschnitt

- 50: zweiter rechter Lagerungsabschnitt
- 52: Werkzeugwechselkette
- 53: Werkzeughalter
- 54: Werkzeug
- 55: Aushöhlung
- 56: Werkzeug-Kettenmagazin
- 57: Umlenkrad
- 58: Antriebsrad
- 59: Antriebsscheibe
- 59₁, 59₂: erste Antriebsscheibe, zweite Antriebsscheibe

- 60: Umlenkabschnitt
- 60₁, 60₂: erster Umlenkabschnitt, zweiter Umlenkabschnitt
- 61: Antriebseinrichtung
- 62: Ausnehmung
- 63: Umlenkscheibe
- 63₁, 63₂: erste Umlenkscheibe, zweite Umlenkscheibe
- 64: Antriebsrad-Kurvenbahn
- 65: Umlenkrad-Kurvenbahn
- 66: Führungsbahn
- 68: Durchbruch

- 70: Leitbahn
- 70₁, 70₂: erste Leitbahn, zweite Leitbahn
- 72: Umlenk-Kurvenbahn
- 74₁: oberer vertikaler Umlenk-Kurvenbahnabschnitt
- 74₂: unterer vertikaler Umlenk-Kurvenbahnabschnitt
- 76: horizontaler Umlenk-Kurvenabschnitt

## Patentansprüche

1. Kettengliedpaarung für eine Werkzeugwechselkette (52) eines Werkzeug-Kettenmagazins (56), umfassend
- mindestens ein erstes Kettenglied (10) mit
- einem ersten Grundträger (12) aus einem ersten Material, der eine erste Längsachse (L1) definiert,
- einem ersten linken Lagerungsabschnitt (20) zum drehbaren Lagern einer ersten Achse (26), auf welche zumindest eine linke Führungsrolle (27) aufschiebbar ist, und
- einem ersten rechten Lagerungsabschnitt (24) zum drehbaren Lagern einer zweiten Achse (28), auf welche zumindest eine rechte Führungsrolle (29) aufschiebbar ist, und
- mindestens ein zweites Kettenglied (45) mit
- einem zweiten Grundträger (46) aus dem ersten Material, der eine zweite Längsachse (L2) definiert,
- einem zweiten linken Lagerungsabschnitt (48) zum drehbaren Lagern der zweiten Achse (28), und
- einem zweiten rechten Lagerungsabschnitt (50) zum drehbaren Lagern der ersten Achse (26), wobei
- das erste Kettenglied (10) und das zweite Kettenglied (45) mittels der ersten Achse (26) oder der zweiten Achse (28) gelenkig miteinander verbindbar sind und
- sowohl das erste Kettenglied (10) als auch das zweite Kettenglied (45) jeweils einen mit dem ersten Grundträger (12) und dem zweiten Grundträger (46) verbindbaren Aufnahmekörper (40) zum Aufnehmen zumindest eines Werkzeugs (54) umfassen, wobei der Aufnahmekörper (40) aus einem zweiten Material besteht oder dieses umfasst.

2. Kettengliedpaarung nach Anspruch 1,
**dadurch gekennzeichnet, dass**
- der erste linke Lagerungsabschnitt (20) und der erste rechte Lagerungsabschnitt (24) derart ausgebildet sind, dass die erste Achse (26) und die zweite Achse (28) im selben Abstand zur ersten Längsachse (L1) und parallel zu dieser angeordnet sind und in einer durch die erste Längsachse (L1) verlaufende Ebene liegen, und
- der zweite linke Lagerungsabschnitt (48) und der zweite rechte Lagerungsabschnitt (50) derart ausgebildet sind, dass die erste Achse (26) und die zweite Achse (28) im selben Abstand zur zweiten Längsachse (L2) und parallel zu dieser angeordnet sind und in einer durch die zweite Längsachse (L2) verlaufende Ebene liegen.

3. Kettengliedpaarung nach einem der Ansprüche 1 oder 2,
**dadurch gekennzeichnet, dass** der Aufnahmekörper (40) eine senkrecht zur Längsachse (L1, L2) ausgerichtete Öffnung (41) aufweist, so dass das Werkzeug (54) mit einer senkrecht zur Längsachse (L1, L2) gerichteten Bewegung in den Aufnahmekörper (40) einbringbar und vom Aufnahmekörper (40) entnehmbar ist.

4. Kettengliedpaarung nach einem der vorherigen Ansprüche,
**dadurch gekennzeichnet, dass** der erste Grundträger (12) und der zweite Grundträger (46) jeweils einen dritten Lagerungsabschnitt (32) zum Lagern einer dritten Achse (34) aufweisen, auf welche zumindest eine Leitrolle (36) aufschiebbar ist, wobei die dritte Achse (34) senkrecht zur ersten Längsachse (L1) und zur zweiten Längsachse (L2) verläuft.

5. Werkzeugwechselkette (52) für ein Werkzeug-Kettenmagazin (56), umfassend eine Anzahl von Kettengliedpaarungen (44) nach einem der vorherigen Ansprüche, bei denen die ersten Kettenglieder (10) und die zweiten Kettenglieder (45) mit den ersten Achsen (26) und den zweiten Achsen (28) gelenkig miteinander verbunden sind.

6. Werkzeugwechselkette (52) nach Anspruch 5,
**dadurch gekennzeichnet, dass**
- auf die erste Achse (26) zwei linke Führungsrollen (27) beabstandet zueinander aufgeschoben sind und
- auf die zweite Achse (28) zwei rechte Führungsrollen (29) beabstandet zueinander aufgeschoben sind.

7. Werkzeugwechselkette (52) nach einem der Ansprüche 5 oder 6,
**dadurch gekennzeichnet, dass** auf die dritte Achse (34) zwei Leitrollen (36) beabstandet zueinander aufgeschoben sind.

8. Werkzeug-Kettenmagazin (56) zum Aufnehmen, Transportieren und Lagern von Werkzeugen (54), umfassend
- eine Werkzeugwechselkette (52) nach einem der Ansprüche 5 bis 7,
- zumindest eine Führungsbahn (66), auf welcher die Führungsrollen (27, 29) abrollen, und
- zumindest ein Antriebsrad (58), welches zum Antreiben der Werkzeugwechselkette (52) in die ersten Kettenglieder (10) und die zweiten Kettenglieder (45) eingreift.

9. Werkzeug-Kettenmagazin (56) nach Anspruch 8,
**dadurch gekennzeichnet, dass** das Antriebsrad (58) in die Führungsrollen (27, 29) eingreift.

10. Werkzeug-Kettenmagazin (56) nach einem der Ansprüche 8 oder 9,
**dadurch gekennzeichnet, dass** die Führungsrollen (27, 29) aus dem ersten Material bestehen oder dieses enthalten oder dass die Führungsrollen (27, 29) aus einem dritten Material bestehen oder dieses enthalten.

11. Werkzeug-Kettenmagazin (56) nach einem der Ansprüche 8 bis 10,
**dadurch gekennzeichnet, dass**
- auf die erste Achse (26) zwei linke Führungsrollen (27) beabstandet zueinander aufgeschoben sind,
- auf die zweite Achse (28) zwei rechte Führungsrolle (29) beabstandet zueinander aufgeschoben sind, und
- das Antriebsrad (58) in die linken Führungsrollen (27) und in die rechten Führungsrollen (29) eingreift.

12. Werkzeug-Kettenmagazin (56) nach Anspruch 11,
**dadurch gekennzeichnet, dass** eine der linken Führungsrollen (27) und eine der rechten Führungsrollen (29) außerhalb des Antriebsrads (58) auf der Führungsbahn (66) abrollen.

13. Werkzeug-Kettenmagazin (56) nach einem der Ansprüche 8 bis 12,
**dadurch gekennzeichnet, dass** das Werkzeug-Kettenmagazin (56) zumindest eine Leitbahn (70) aufweist, auf welcher die Leitrollen (36) abrollen.

14. Werkzeug-Kettenmagazin (56) nach Anspruch 13,
**dadurch gekennzeichnet, dass** das Werkzeug-Kettenmagazin (56) eine erste Leitbahn (70₁) und eine zweite Leitbahn (70₂) aufweisen und eine erste Leitrolle (36₁) und eine zweite Leitrolle (36₂) beabstandet zueinander auf die dritte Achse (34) aufgeschoben sind, wobei außerhalb des Antriebsrads (58) die erste Leitrolle (36₁) auf der ersten Leitbahn (70) und die zweite Leitrolle (36₂) auf der zweiten Leitbahn (70) abrollen.

15. Werkzeug-Kettenmagazin (56) nach einem der Ansprüche 8 bis 14,
**dadurch gekennzeichnet, dass** das Werkzeug-Kettenmagazin (56) zumindest einen Umlenkabschnitt (60) mit einer Umlenk-Kurvenbahn (72) aufweist, wobei die Führungsrollen (27, 29) und/oder die Leitrollen (36) auf der Umlenk-Kurvenbahn (72) abrollen.
